# FASCICULE DE BREVET EUROPEEN

(11) **EP 2 430 713 B1**
(45) Date de publication et mention de la délivrance du brevet: **01.11.2017**
(21) Numéro de dépôt: 10727473.0
(22) Date de dépôt: 07.05.2010
(51) Int. Cl.: H01S 3/30, H01S 4/00, H05G 2/00, H01S 3/09

(54) **PROCEDE DE GENERATION ET SYSTEME LASER A ELECTRONS LIBRES PAR INTERACTION AVEC UN ONDULEUR LASER**
VERFAHREN ZUM ERZEUGEN VON FREIEN ELEKTRONEN UND FREIELEKTRONENLASERSYSTEM, DAS DIE WECHSELWIRKUNG MIT EINEM LASERINVERTER VERWENDET
METHOD FOR GENERATING FREE ELECTRONS AND FREE-ELECTRON LASER SYSTEM USING THE INTERACTION WITH A LASER INVERTER

(30) Priorité: 15.05.2009 FR 0902372
(43) Date de publication de la demande: 21.03.2012
(73) Titulaire: Centre National de la Recherche Scientifique (C.N.R.S.), 75794 Paris Cedex 16 (FR)
(72) Inventeur: BALCOU, Philippe, F-33400 Talence (FR)
(74) Mandataire: Novagraaf Technologies
(86) Numéro de dépôt international: PCT/FR2010/050880
(87) Numéro de publication internationale: WO 2010/130924

(56) Documents cités:
- US-A- 5 247 562
- US-A1- 2005 147 147
- KUPERSZTYCH J: "Laser-driven free-electron laser via the relativistic aberration of light rays" JOURNAL OF PHYSICS B (ATOMIC, MOLECULAR AND OPTICAL PHYSICS) UK, vol. 27, no. 1, 14 janvier 1994 (1994-01-14), pages L33-L39, XP002562358 ISSN: 0953-4075
- KUPERSZTYCH J: "Frequency up-conversion and amplification of laser radiation with use of laser and electron beams: Kapitsa-Dirac free-electron laser" PHYSICAL REVIEW LETTERS USA, vol. 70, no. 6, 8 février 1993 (1993-02-08), pages 770-773, XP002562359 ISSN: 0031-9007
- FEDOROV M V ET AL: "FREE-ELECTRON LASER BASED ON THE EFFECT OF CHANNELING IN AN INTENSE STANDING LIGHT WAVE" APPLIED PHYSICS LETTERS, AIP, AMERICAN INSTITUTE OF PHYSICS, MELVILLE, NY, US, vol. 53, no. 5, 1 août 1988 (1988-08-01), page 353/354, XP000020100 ISSN: 0003-6951

## Description

La présente invention concerne un système laser à électron libres et un procédé de génération d'un faisceau laser à électrons libres, par interaction avec un onduleur laser.

### DOMAINE TECHNIQUE

La présente invention se rapporte au domaine de la génération de faisceaux laser à électrons libres aptes à fournir des rayonnements de très courte longueur d'onde, dans une gamme spectrale allant de l'ultra-violet lointain aux rayons gamma.

Elle a plus particulièrement pour objet un système laser à électrons libres, comprenant un moyen de génération d'un paquet d'électrons relativistes apte à se propager suivant une direction de propagation et un moyen de génération d'un faisceau onduleur apte à interagir avec le paquet d'électrons relativistes.

Elle a également pour objet un procédé de génération d'un faisceau laser à électrons libres, comprenant une étape de génération d'un paquet d'électrons relativistes apte à se propager suivant une direction de propagation, et une étape de génération d'un faisceau onduleur apte à interagir avec le paquet d'électrons relativistes.

### ÉTAT DE LA TECHNIQUE ANTERIEURE

L'état de la technique dans ce domaine comporte différents types de lasers à rayons X, parmi lesquels les plus communément utilisés sont les lasers à rayons X en milieu plasma, dont un exemple est décrit dans le document de brevet US 6,693,989. Un système de génération de rayonnements dans le domaine spectral des rayons X comprend des générateurs d'impulsion laser et de paquets d'atomes à l'état gazeux. L'impulsion laser est dirigée à l'intérieur du paquet d'atomes de manière à produire une excitation atomique, afin de retirer des électrons atomiques sélectionnés sans retirer tous les électrons. Une inversion de population est alors générée et une région de propagation, non-linéaire et en mode confiné, de rayonnements dans le domaine spectral des rayons X est établie. La densité du paquet d'atomes à l'état gazeux est contrôlé dans cette région de propagation ainsi établie, de manière à éviter que la propagation des rayons X ne s'éteigne.

L'invention décrite dans ce document permet d'obtenir un faisceau de photons dont la longueur d'onde est de 2,9 Angströms. Le système décrit présente néanmoins les inconvénients majeurs suivants :
- l'énergie de photons est fixe,
- le faisceau ne peut pas être contrôlé en divergence, ni en nombre de photons, ni en durée d'impulsion,
- la synchronisation temporelle ne peut pas être contrôlée,
- il nécessite l'emploi d'un laser excitateur à gaz de fluorure de xénon, fonctionnant à une longueur d'onde de 248 nm, qui est difficilement utilisable en dehors d'un laboratoire de recherche dédié.

D'une manière plus générale, de tels systèmes laser présentent l'inconvénient de ne pas permettre d'atteindre le domaine spectral des rayons X, mais plutôt celui des rayons XUV, autrement dit le domaine des rayons X ultra-violets lointains.

Un problème général dans ce domaine consiste ainsi à générer un faisceau laser dont les photons puissent avoir une énergie supérieure à une valeur seuil typique dans la gamme ses rayons X, par exemple de 500 eV, c'est-à-dire une longueur d'onde inférieure à 2 nm.

Un autre problème général dans ce domaine consiste en la synchronisation temporelle du faisceau laser X, qui ne peut généralement être définie à mieux que quelques centaines de femtosecondes près.

Pour résoudre les problèmes susmentionnés, il a été proposé de mettre en oeuvre des lasers à électrons libres en régime Compton, basé sur l'utilisation d'un accélérateur d'électrons couplé à une structure de type onduleur, apte à provoquer une ondulation transverse des électrons. [C. Pellegrini, « Design considerations for a SASE X-ray FEL », Nucl Inst Meth. A 475 (2001) 1-12].

Selon une première variante de laser à électrons libres X, l'accélérateur porte les électrons à des énergies de l'ordre de 10GeV et l'onduleur est de nature magnétique.

Cette variante ne permet cependant pas d'atteindre des énergies de photons X élevées, idéalement nettement supérieures à 10 keV, tout en présentant un coût et un encombrement significativement réduits.

Selon une deuxième variante de laser à électrons libres X, l'accélérateur porte les électrons relativistes à des énergies de l'ordre de 10 et 100 MeV et l'onduleur est un laser se propageant dans la direction opposée à la direction de propagation du paquet d'électrons relativistes.

Cette variante présente plusieurs inconvénients principaux. Le premier est de nécessiter des dispersions en énergie « delta-gamma / gamma » des électrons du paquet qui soient extrêmement faibles (sensiblement inférieures à 1%). Un deuxième est d'obtenir des émittances normalisées du paquet d'électrons très faibles (sensiblement inférieures à 1 mm.mrad). Une autre difficulté est de réaliser un éclairement laser rigoureusement constant dans la zone d'interaction (variations relatives d'éclairement sensiblement inférieures à 1% typiquement), sans possibilité simple de contrôler finement la distribution d'éclairement laser dans cette zone.

Une autre solution technique pour créer des faisceaux de rayons X à haut flux [Z. Huang et R.D. Ruth. «Laser-electron storage ring». Physical Review Letters, 80(5):976 - 9, February 1998] consiste à utiliser un dispositif comprenant un anneau de stockage d'électrons relativistes, ou bien un ensemble d'un ou deux accélérateurs linéaires à récupération d'énergie, couplé à une cavité laser, active ou passive, sous la forme d'un résonateur Fabry-Pérot de haute finesse. Ce dispositif de source compacte de lumière (« compact light source » en anglais) est également connu sous le nom de synchrotron Fabry-Pérot.

Cette solution présente cependant des inconvénients majeurs. Le premier est que le rayonnement X est très difficilement accordable, c'est-à-dire qu'il est très difficile de modifier l'énergie des photons X. Un deuxième inconvénient résulte du fait que cette source ne présente pas de cohérence spatiale ou temporelle propre, en dehors de la cohérence spatiale induite par l'éventuelle propagation libre du faisceau. Un autre inconvénient réside dans la durée des impulsions X obtenues, typiquement de l'ordre de 1 à 10 picosecondes.

Des systèmes laser à électron libres par interaction avec un onduleur laser sont connus de Kupersztych, "Laser-driven free-electron laser via the relativistic aberration of light rays", Journal of Physics B (Atomic, Molecular and Optical Physics) vol. 27, no. 1, (1994-01-14), pages L33-L39, et Kupersztych "Frequency up-conversion and amplification of laser radiation with use of laser and electron beams: Kapitsa-Dirac free-electron laser", Physical Review Letters, vol. 70, no. 6, (1993-02-08), pages 770-773.

Ainsi, aucune des solutions de l'état de la technique ne permet de fournir des faisceaux laser dans le domaine de l'ultra-violet lointain ou des rayons X, qui soient accordables, de faible durée d'impulsions (par exemple de l'ordre de 5 à 100 femtosecondes), pour un coût et un encombrement raisonnables. De plus, aucune solution connue de l'état de la technique ne permet de fournir des faisceaux laser dans le domaine des rayons X durs (supérieurs ou très supérieurs à 10 keV), ou des rayons Gamma (très supérieurs à 100 keV).

### OBJET DE L'INVENTION

Le but de la présente invention est de pallier aux insuffisances et inconvénients de Il'état de la technique ci-dessus, en permettant la création d'un faisceau de photons dans les domaines spectraux de l'ultra-violet lointain, des rayons X et des rayons gamma, à partir d'une interaction particulière entre un paquet d'électrons relativistes et un faisceau onduleur laser provenant d'une superposition spécifique. Dans ce but, l'invention a pour objet un système laser à électrons libres tel que décrit précédemment, dans lequel le faisceau onduleur est issu de la superposition, au niveau d'une zone d'interaction traversée par la direction de propagation du paquet d'électrons relativistes, d'au moins deux faisceaux laser se propageant dans des directions différentes l'une de l'autre, chaque direction présentant au moins une composante non nulle dans le plan orthogonal à la direction de propagation de ce paquet.

Les faisceaux laser interfèrent entre eux de façon à créer un potentiel lumineux périodique, dont les minimas sont parallèles à la direction de propagation des électrons.

La solution repose sur l'utilisation d'un onduleur de type onduleur laser, dans lequel l'onduleur résulte de la superposition d'au moins deux faisceaux lasers., Les vecteurs polarisations de ces faisceaux permettent l'établissement de franges d'interférences, de façon à ce que le potentiel énergétique -dit potentiel pondéromoteur-, imposé aux électrons relativistes par l'éclairement laser, présente des oscillations dans au moins une direction orthogonale à la direction de propagation des électrons relativistes.

Dans ces conditions, les électrons relativistes peuvent être piégés dans au moins une direction transverse par le potentiel pondéromoteur par effet « Kapitza-Dirac » en champ intense.

Lorsque, de plus, la polarisation des lasers comprend une composante commune non nulle dans une direction orthogonale à la direction de déplacement des électrons, alors un faisceau de rayonnement de courte longueur d'onde est formé dans la direction de propagation des électrons par :
- diffusion des photons laser sur les électrons relativistes avec un décalage spectral important par effet Doppler-Fizeau, et
- amplification des premiers photons diffusés par effet Raman stimulé.

Selon un mode particulier de réalisation, le faisceau onduleur est issu de la superposition de deux faisceaux laser.

Dans ce dernier cas, il peut être avantageusement prévu, de façon à optimiser le faisceau laser à électrons libres en sortie du système, que les deux faisceaux laser se propagent dans des directions opposées et, de plus, que les deux faisceaux laser se propagent dans des directions perpendiculaires à la direction de propagation du paquet.
De préférence, le moyen de génération du paquet et le moyen de génération du faisceau onduleur sont synchronisés.

De préférence, le moyen de génération du faisceau onduleur comprend une source laser dont le faisceau d'origine est découpé de manière à former les faisceaux laser.

Selon des variantes de mise en oeuvre du système :
- les longueurs d'onde des au moins deux faisceaux laser se situent dans le domaine proche infrarouge (800 nm à 1,05 µm),
- les longueurs d'onde des au moins deux faisceaux laser se situent dans le domaine moyen infrarouge (1,1 µm à 10 µm).

Selon des variantes de réalisation du moyen de génération du paquet d'électrons relativistes, celui peut comporter :
- soit un LINAC RF(abréviation de « Accelérateur linéaire radiofréquence »),
- soit un accélérateur laser par sillage plasma,
- soit un anneau de stockage d'électrons.

Selon un mode particulier de réalisation, les faisceaux laser se propagent selon une géométrie d'onde inhomogène correspondant à une mise en forme spatiale et temporelle telle que le lieu du maximum d'énergie de chaque faisceau laser présente un décalage angulaire par rapport aux fronts de phase dans la zone d'interaction.

De préférence, les faisceaux laser sont confinés à l'intérieur d'une cavité résonante optique.

Selon des variantes de mise en oeuvre, le système comprend :
- des moyens de contrôle des fronts de phase, et/ou
- des moyens de contrôle de phase spectrale.

La présente invention concerne également un procédé de génération d'un faisceau laser à électrons libres. Ce procédé comprend une étape de génération d'un paquet d'électron relativistes apte à se propager suivant une direction de propagation et une étape de génération d'un faisceau onduleur apte à interagir avec le paquet d'électrons relativistes. Il comprend également, de manière à générer le faisceau onduleur, une étape préalable d'interférence, au niveau d'une zone d'interaction traversée par la direction de propagation dudit paquet, d'au moins deux faisceaux laser se propageant dans des directions différentes l'une de l'autre et présentant chacune au moins une composante non nulle dans le plan orthogonal à la direction de propagation dudit paquet, une étape de piégeage des électrons relativistes dans les franges d'interférence du faisceau onduleur par injection à l'entrée de la zone d'interaction, et une étape d'amplification dans l'onduleur d'un faisceau résultant de la diffusion des lasers sur les électrons relativistes.

### BREVE DESCRIPTION DES DESSINS

L'invention sera mieux comprise à la lecture de la description détaillée d'un exemple non limitatif de réalisation, accompagnée de figures représentant respectivement :
- la figure 1, un schéma d'un système laser à électrons libres selon un premier mode de réalisation de l'invention,
- la figure 2, des schémas illustrant différentes variantes de superposition de faisceaux laser de manière à générer l'onduleur laser, et
- la figure 3, un schéma illustrant un exemple de découpe d'un faisceau laser en deux faisceaux se superposant dans la zone d'interactions.

### EXPOSE DETAILLE DE MODES DE REALISATION PARTICULIERS

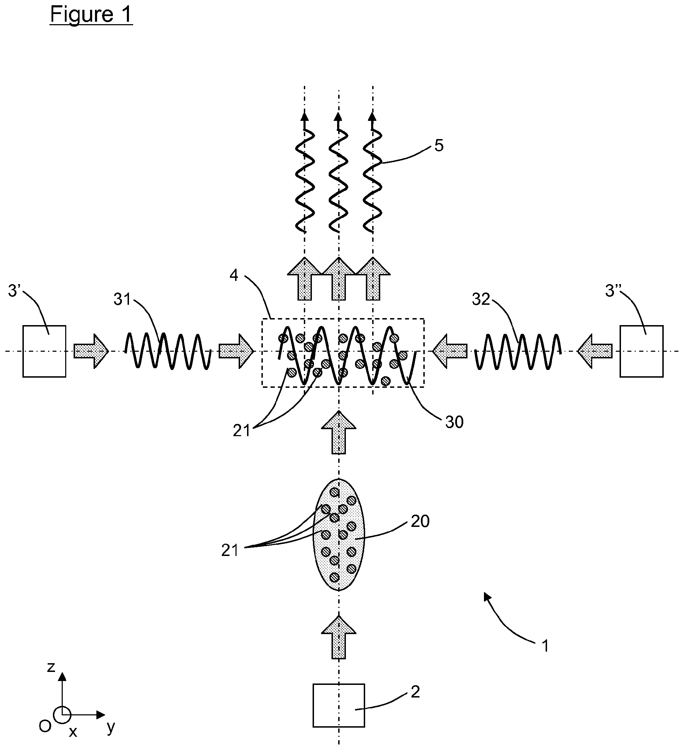

En référence à la figure 1, un système laser à électrons libres, selon un premier mode de réalisation de l'invention, comprend un générateur 2 d'un paquet 20 d'électrons relativistes 21, ainsi qu'un laser intense 3',3" synchronisé aux électrons.

Le générateur 2 permet de générer un paquet 20 ayant une énergie typiquement entre 10 et 50 MeV. Des énergies supérieures sont également envisageables, selon des variantes où l'on souhaite par exemple coupler le générateur 2 à des lasers dans l'infrarouge moyen ou atteindre la gamme spectrale des rayons X très durs.

Au vu de cette énergie, on comprend que le faisceau d'électrons atteint des vitesses relativistes avec un facteur de Lorentz γ typiquement supérieur à 2.

En fonction de la variante de réalisation sélectionnée, ce générateur 2 peut être soit un générateur LINAC RF ou un anneau de stockage, soit un accélérateur laser par sillage plasma.

Le paquet 20 se propage suivant un axe de propagation, qui est représenté sur la figure 1 par l'axe Oz. Il présente avantageusement une dispersion en énergie et ne émittance normalisée aussi faibles que possible. Dans le cas d'une réalisation où le générateur 2 est un LINAC RF ou un anneau de stockage, le paquet 20 est mis en forme par une focalisation électronique adaptée.

Selon le mode de réalisation préféré de l'invention, le laser 3',3" produit un faisceau laser d'origine, qui est découpé en deux parties identiques 31 et 32, qui se propagent dans des directions opposées, suivant l'axe Oy perpendiculaire à l'axe Oz de propagation du paquet 20. Des moyens de direction des faisceaux jumeaux 31 et 32 sont prévus pour superposer lesdits faisceaux sur le chemin des électrons relativistes 21, c'est-à-dire au niveau de l'axe Oz de propagation du paquet 20 d'électrons.

La polarisation commune des deux faisceaux 31 et 32 est suivant l'axe Ox, respectivement perpendiculaire à l'axe Oy de propagation de ces deux faisceaux 31 et 32, et à l'axe Oz de propagation du paquet d'électrons. L'interférence entre ces deux faisceaux forme un onduleur 30. Il en résulte par diffusion cohérente des photons dans l'onduleur la création d'un faisceau laser 5 de courte longueur d'onde, par exemple un nanomètre. La polarisation ayant une composante non nulle hors du plan (Oy, Oz) permet avantageusement de diffuser les photons.

De manière équivalente au mode de réalisation préféré ci-dessus, le moyen de propagation des deux faisceaux 31 et 32 est agencé pour permettre une propagation desdits faisceaux suivant un axe non parallèle à l'axe Oy de la figure 1, mais toujours perpendiculaire à l'axe de propagation du paquet d'électrons (Oz), étant entendu que les axes Ox, Oy et Oz ne sont indiqués sur la figure 1 qu'à titre de références spatiales aux fins d'une meilleure compréhension de l'invention. Ainsi, l'axe de propagation des deux faisceaux contra-propageants peut être n'importe quel axe appartenant au plan xOy orthogonal à l'axe (Oz) de propagation du paquet.

Selon d'autres variantes de mise en oeuvre, les deux faisceaux présentent chacun au moins une composante non nulle dans le plan xOy orthogonal à la direction Oz de déplacement des électrons, sans pour autant que les deux faisceaux jumeaux ne se déplacent suivant un axe perpendiculaire à l'axe de propagation des électrons.

Selon encore d'autres variantes de mise en oeuvre, les deux faisceaux ne sont pas contre-propageants l'un par rapport à l'autre, mais leurs directions respectives de propagation présentent une inclinaison non nulle.

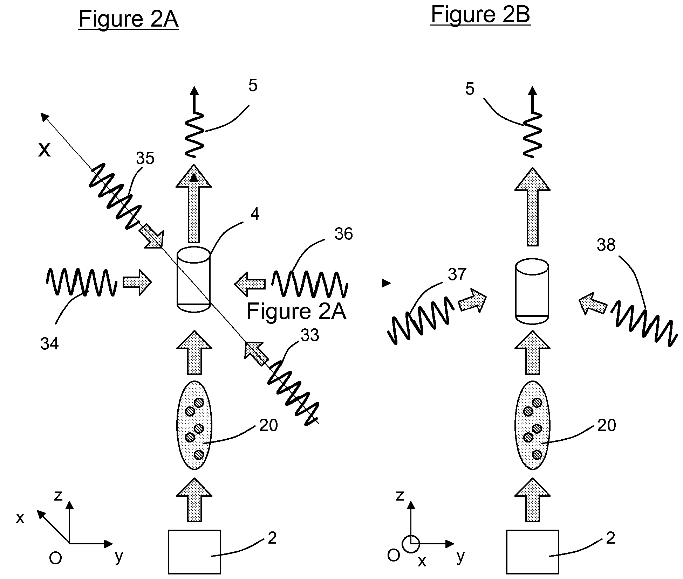

On décrit maintenant différentes variantes de superposition de faisceaux laser de manière à générer l'onduleur laser, en référence aux figures 2A et 2B.

Dans la variante illustrée par la figure 2A, quatre faisceaux 33, 34, 35 et 36 interagissent au niveau d'une même zone 4, sur le chemin des électrons du paquet 20, le long de l'axe Oz. Les faisceaux 33 et 35, ainsi que les faisceaux 34 et 36, sont contra-propageants, respectivement suivant les axes Ox et Oy.

Dans la variante illustrée par la figure 2B, deux faisceaux 37 et 38 interagissent au niveau de la zone 4. Ces faisceaux ne se propagent pas dans des sens opposés suivant le même axe, leurs directions respectives présentant un angle non nul l'une par rapport à l'autre. Leurs directions de propagation ne sont pas perpendiculaires à la direction de propagation (Oz) des électrons, mais présentent le même angle par rapport à (Oz).

De multiples combinaisons des variantes ci-dessus, issues des figures précédentes, sont possibles. L'homme du métier comprendra à travers ces différentes variantes que la présente invention peut être mise en oeuvre à partir d'un nombre de faisceaux laser supérieur à deux et se propageant dans des directions non parallèles à la direction (Oz) de propagation des électrons.

Ainsi, si α est l'angle formé entre les faisceaux lasers et la direction de propagation des électrons, α est compris entre arcsin (1/γ), strictement, et π et est plus particulièrement voisin de π/2.

Physiquement, le fonctionnement des dispositifs décrits est basé sur l'émission électromagnétique liée à l'oscillation des électrons soumis au double champ laser, à la fréquence optique. Cette émission apparaît dans le référentiel du laboratoire avec un décalage Doppler important variant comme 2 fois le facteur de Lorentz au carré (2 γ²)., permettant d'atteindre le domaine des rayons X. Cette émission est rendue cohérente par un regroupement transverse à la fréquence mixte de la fréquence optique et de la fréquence d'oscillation de fond de puits. Autrement dit, elle est réalisée par un phénomène de type « Raman » avec couplage entre une excitation extérieure haute fréquence, la fréquence optique, et une oscillation basse fréquence, la fréquence d'oscillation du fond de puits, sur un mode propre du système.

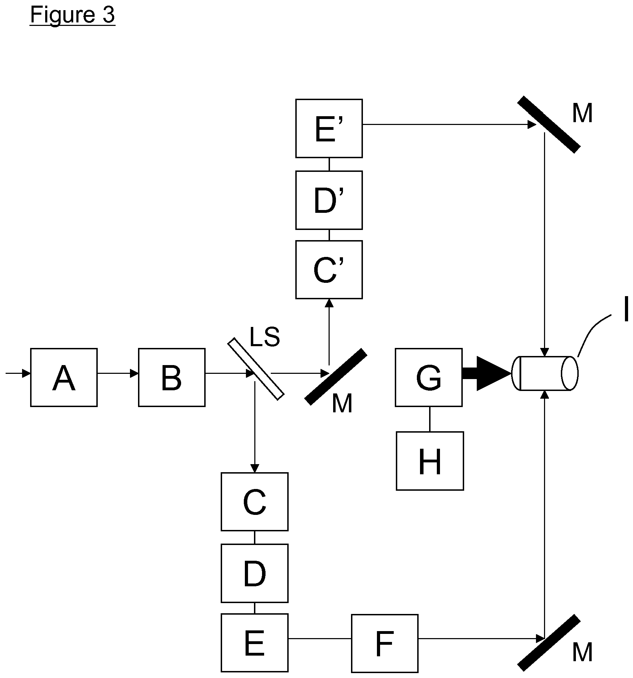

Dans la variante illustrée par la figure 3, le faisceau laser est tout d'abord sujet à une mise en forme spectrale par un dispositif A, situé à tout endroit adapté dans la chaine laser ; puis à un dispositif B de dispersion spectrale angulaire, afin de créer une onde dite « inhomogène » ; puis est découpé en deux faisceaux identiques par une lame séparatrice LS. Chacun des deux faisceaux traverse alors un dispositif C, C' d'imagerie dans le plan de la figure, de mise en forme spatiale D, D', puis de focalisation E,E' dans le plan perpendiculaire à la figure. L'un des faisceaux fait l'objet d'un retard temporel contrôlé par un dispositif F. Les deux faisceaux laser se superposent dans la zone d'interaction I, dans laquelle ils interagissent conjointement avec un paquet d'électrons issu d'un dispositif accélérateur G, lui-même déclenché par un dispositif H de synchronisation avec le laser.

Le procédé de génération d'un faisceau laser à électrons libres selon l'invention consiste donc en :
- une étape de génération d'un paquet 20 d'électrons relativistes 21 apte à se propager suivant la direction de propagation Oz,
- une étape de superposition, au niveau d'une zone d'interaction 4 traversée par la direction de propagation Oz du paquet 20, d'au moins deux faisceaux laser 31 et 32 se propageant dans des directions différentes les unes des autres et différentes de la direction de propagation Oz du paquet 20, de façon à générer un faisceau onduleur 30 apte à interagir avec le paquet 20 d'électrons relativistes 21 ;
- une étape de piégeage des électrons relativistes dans les franges d'interférence du faisceau onduleur 30 par injection à l'entrée de la zone d'interaction 4, et
- une étape d'amplification dans l'onduleur 30 du faisceau 5 résultant de la diffusion des lasers 31 -32 sur les électrons relativistes.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

## Revendications

1. Système laser (1) à électron libres fournissant un faisceau de très courte longueur d'onde, dans une gamme spectrale allant de l'ultra-violet lointain aux rayons gamma, comprenant un moyen (2) de génération d'un paquet (20) d'électrons relativistes (21) apte à se propager suivant une direction de propagation (Oz) et un moyen (3,3") de génération d'un faisceau onduleur (30) apte à interagir avec le paquet (20) d'électrons relativistes (21), **caractérisé en ce que** le faisceau onduleur (30) est issu de l'interférence, au niveau d'une zone d'interaction (4) traversée par la direction de propagation (Oz) dudit paquet (20), d'exclusivement au moins deux faisceaux laser (31,32) se propageant dans des directions différentes les unes des autres et présentant chacune au moins une composante non nulle dans le plan orthogonal à la direction de propagation (Oz) dudit paquet d'électrons (20).

2. Système laser (1) selon la revendication 1, dans lequel le faisceau onduleur (30) est issu de la superposition de deux faisceaux laser (31,32).

3. Système laser (1) selon la revendication 2, dans lequel les deux faisceaux laser (31,32) se propagent dans des directions opposées.

4. Système laser (1) selon la revendication 2 ou 3, dans lequel les deux faisceaux laser (31,32) se propagent dans des directions perpendiculaires à la direction de propagation (Oz) du paquet (20).

5. Système laser (1) selon l'une des revendications précédentes, dans lequel le moyen (2) de génération du paquet (20) et le moyen (3',3") de génération du faisceau onduleur (30) sont synchronisés.

6. Système laser (1) selon l'une des revendications précédentes, dans lequel le moyen (3',3") de génération du faisceau onduleur (30) comprend une source laser dont le faisceau d'origine est découpé de manière à former les au moins deux faisceaux laser (31,32).

7. Système laser (1) selon l'une des revendications 1 à 6, dans lequel les longueurs d'onde des au moins deux faisceaux laser (31,32) se situent dans le domaine proche infrarouge (800 nm à 1,05 µm).

8. Système laser (1) selon l'une des revendications 1 à 6, dans lequel les longueurs d'onde des au moins deux faisceaux laser (31,32) se situent dans le domaine moyen infrarouge (1,1 µm à 10 µm).

9. Système laser (1) selon l'une des revendications 1 à 8, dans lequel le moyen (2) de génération du paquet (20) d'électrons relativistes (21) comporte un LINAC RF.

10. Système laser (1) selon l'une des revendications 1 à 8, dans lequel le moyen (2) de génération du paquet (20) d'électrons relativistes (21) comporte un accélérateur laser par sillage plasma.

11. Système laser (1) selon l'une des revendications 1 à 8, dans lequel le moyen (2) de génération du paquet (20) d'électrons relativistes (21) comporte un anneau de stockage d'électrons.

12. Système laser (1) selon l'une des revendications précédentes, dans lequel les au moins deux faisceaux laser (31,32) se propagent selon une géométrie d'onde inhomogène correspondant à une mise en forme spatiale et temporelle telle que le lieu du maximum d'énergie de chaque faisceau laser (31,32) présente un décalage angulaire par rapport aux fronts de phase dans la zone d'interaction (4).

13. Système laser (1) selon l'une des revendications précédentes, dans lequel au moins un troisième faisceau assure le piégeage des électrons relativistes dans le plan transverse à l'axe (Oz) et tout au long de la zone d'interaction (4).

14. Système laser (1) selon l'une des revendications 1 à 12, dans lequel au moins un dispositif de mise en forme spatiale des faisceaux laser assure le piégeage des électrons relativistes dans le plan transverse à l'axe (Oz) et tout au long de la zone d'interaction (4).

15. Système laser (1) selon l'une des revendications précédentes, dans lequel les faisceaux laser (31,32) sont confinés à l'intérieur d'une cavité résonante optique.

16. Système laser (1) selon l'une des revendications précédentes, comprenant des moyens de contrôle des fronts de phase.

17. Système laser (1) selon l'une des revendications précédentes, comprenant des moyens de contrôle de phase spectrale.

18. Procédé de génération d'un faisceau laser (5) à électrons libres fournissant un faisceau de très courte longueur d'onde, dans une gamme spectrale allant de l'ultra-violet lointain aux rayons gamma, comprenant une étape de génération d'un paquet (20) d'électrons relativistes aptes à se propager suivant une direction de propagation (Oz) et une étape de génération d'un faisceau onduleur (30) apte à interagir avec le paquet (20) d'électrons relativistes (21), **caractérisé en ce qu'**il comprend, de manière à générer le faisceau onduleur (30), une étape préalable d'interférence, au niveau d'une zone d'interaction (4) traversée par la direction de propagation (Oz) dudit paquet (20), d'exclusivement au moins deux faisceaux laser (31,32) se propageant dans des directions différentes les unes des autres et présentant chacune au moins une composante non nulle dans le plan orthogonal à la direction de propagation (Oz) dudit paquet d'électrons (20), une étape de piégeage des électrons relativistes dans les franges d'interférence du faisceau onduleur (30) par injection à l'entrée de la zone d'interaction (4), et une étape d'amplification dans l'onduleur (30) d'un faisceau (5) résultant de la diffusion des lasers (31,32) sur les électrons relativistes.

## Patentansprüche

1. Lasersystem (1) mit freien Elektronen, das einen Strahl mit sehr kurzer Wellenlänge in einem Spektralbereich liefert, der vom extremen Ultraviolett bis zu Gammastrahlen reicht, umfassend ein Mittel (2) zur Erzeugung eines Pakets (20) von relativistischen Elektronen (21), das ausgelegt ist, um sich gemäß einer Ausbreitungsrichtung (Oz) auszubreiten, und ein Mittel (3,3") zur Erzeugung eines Wechselrichterstrahls (30), das ausgelegt ist, um mit dem Paket (20) von relativistischen Elektronen (21) zu interagieren, **dadurch gekennzeichnet, dass** der Wechselrichterstrahl (30) aus der Interferenz auf dem Niveau einer Interaktionszone (4) stammt, die von der Ausbreitungsrichtung (Oz) des Pakets (20) gequert wird, wobei sich ausschließlich mindestens zwei Laserstrahlen (31, 32) in verschiedenen Richtungen voneinander ausbreiten und jeweils mindestens eine Komponente nicht gleich null auf der orthogonalen Ebene zur Ausbreitungsrichtung (Oz) des Pakets von Elektronen (20) aufweisen.

2. Lasersystem (1) nach Anspruch 1, wobei der Wechselrichterstrahl (30) aus der Überlagerung von zwei Laserstrahlen (31, 32) stammt.

3. Lasersystem (1) nach Anspruch 2, wobei sich die zwei Laserstrahlen (31, 32) in entgegen gesetzten Richtungen ausbreiten.

4. Lasersystem (1) nach Anspruch 2 oder 3, wobei sich die zwei Laserstrahlen (31, 32) in senkrechten Richtungen zur Ausbreitungsrichtung (Oz) des Pakets (20) ausbreiten.

5. Lasersystem (1) nach einem der vorhergehenden Ansprüche, wobei das Mittel (2) zur Erzeugung des Pakets (20) und das Mittel (3', 3") zur Erzeugung des Wechselrichterstrahls (30) synchronisiert sind.

6. Lasersystem (1) nach einem der vorhergehenden Ansprüche, wobei das Mittel (3', 3") zur Erzeugung des Wechselrichterstrahls (30) eine Laserquelle umfasst, deren Originalstrahl derart geschnitten ist, dass er mindestens zwei Laserstrahlen (31, 32) bildet.

7. Lasersystem (1) nach einem der Ansprüche 1 bis 6, wobei sich die Wellenlängen der mindestens zwei Laserstrahlen (31, 32) im Bereich nahe Infrarot (800 nm bis 1,05 µm) befinden.

8. Lasersystem (1) nach einem der Ansprüche 1 bis 6, wobei sich die Wellenlängen der mindestens zwei Laserstrahlen (31, 32) im Bereich mitte Infrarot (1,1 µm bis 10 µm) befinden.

9. Lasersystem (1) nach einem der Ansprüche 1 bis 8, wobei das Mittel (2) zur Erzeugung des Pakets (20) von relativistischen Elektronen (21) ein LINAC RF umfasst.

10. Lasersystem (1) nach einem der Ansprüche 1 bis 8, wobei das Mittel (2) zur Erzeugung des Pakets (20) von relativistischen Elektronen (21) einen Laserbeschleuniger durch Plasmawindschatten umfasst.

11. Lasersystem (1) nach einem der Ansprüche 1 bis 8, wobei das Mittel (2) zur Erzeugung des Pakets (20) von relativistischen Elektronen (21) einen Elektronenspeicherring umfasst.

12. Lasersystem (1) nach einem der vorhergehenden Ansprüche, wobei sich die mindestens zwei Laserstrahlen (31, 32) gemäß einer nicht homogenen Wellengeometrie ausbreiten, die einer räumlichen und zeitlichen Formgebung entsprechen, so dass die Stelle der maximalen Energie jedes Laserstrahls (31, 32) eine Winkelversetzung mit Bezug auf die Phasenfront in der Interaktionszone (4) aufweist.

13. Lasersystem (1) nach einem der vorhergehenden Ansprüche, wobei mindestens ein dritter Strahl das Einfangen der relativistischen Elektronen auf der Ebene quer zur Achse (Oz) und entlang der gesamten Interaktionszone (4) sicherstellt.

14. Lasersystem (1) nach einem der Ansprüche 1 bis 12, wobei mindestens eine Vorrichtung zur räumlichen Formgebung der Laserstrahlen das Einfangen der relativistischen Elektronen auf der Ebene quer zur Achse (Oz) und entlang der gesamten Interaktionszone (4) sicherstellt.

15. Lasersystem (1) nach einem der vorhergehenden Ansprüche, wobei die Laserstrahlen (31, 32) im Inneren eines optisch resonanten Hohlraums eingeschlossen sind.

16. Lasersystem (1) nach einem der vorhergehenden Ansprüche, umfassend Mittel zur Steuerung der Phasenfronten.

17. Lasersystem (1) nach einem der vorhergehenden Ansprüche, umfassend Mittel zur Steuerung der Spektralphase.

18. Verfahren zur Erzeugung eines Laserstrahls (5) mit freien Elektronen, das einen Strahl mit sehr kurzer Wellenlänge in einem Spektralbereich liefert, der vom extremen Ultraviolett bis zu Gammastrahlen reicht, umfassend einen Schritt des Erzeugens eines Pakets (20) von relativistischen Elektronen, die ausgelegt sind, um sich gemäß einer Ausbreitungsrichtung (Oz) auszubreiten, und einen Schritt des Erzeugens eines Wechselrichterstrahls (30), der ausgelegt ist, um mit dem Paket (20) von relativistischen Elektronen (21) zu interagieren, **dadurch gekennzeichnet, dass** es, um den Wechselrichterstrahl (30) zu erzeugen, einen vorherigen Schritt des Interferierens, auf dem Niveau einer Interaktionszone (4) umfasst, die von der Ausbreitungsrichtung (Oz) des Pakets (20) gequert wird, wobei sich ausschließlich mindestens zwei Laserstrahlen (31, 32) in verschiedenen Richtungen voneinander ausbreiten und jeweils mindestens eine Komponente nicht gleich null auf der orthogonalen Ebene zur Ausbreitungsrichtung (Oz) des Pakets von Elektronen (20) aufweisen, einen Schritt des Einfangens der relativistischen Elektronen in den Interferenzstreifen des Wechselrichterstrahls (30) durch Injektion am Eingang der Interaktionszone (4), und einen Schritt des Erweiterns im Wechselrichter (30) eines Strahls (5), der sich aus der Streuung der Laser (31, 32) auf den relativistischen Elektronen ergibt.

## Claims

1. A free electron laser system (1), providing a very short wavelength beam in a spectral range from far ultra-violet to gamma rays, comprising means (2) for generating a packet (20) of relativistic electrons (21) capable of propagating in a propagation direction (Oz) and means (3, 3') for generating an undulator beam (30) capable of interacting with the packet (20) of relativistic electrons (21), **characterized in that** the undulator beam (30) results from the interference, at an interaction area (4) traversed by the propagation direction (Oz) of the packet (20), of exclusively at least two laser beams (31, 32) propagating in directions different from each other and each having at least a non-zero component in the plane orthogonal to the propagation direction (Oz) of said packet (20).

2. The laser system (1) according to claim 1, wherein the undulator beam (30) results from the superposition of two laser beams (31, 32).

3. The laser system (1) according to claim 2, wherein the two laser beams (31, 32) propagate in opposite directions.

4. The laser system (1) according to claim 2 or 3, wherein the two laser beams (31, 32) propagate in directions perpendicular to the propagation direction (Oz) of the packet (20).

5. The laser system (1) according to any one of the preceding claims, wherein the means (2) for generating the packet (20) and the means (3', 3") for generating the undulator beam (30) are synchronized.

6. The laser system (1) according to any one of the preceding claims, wherein the means (3', 3") for generating the undulator beam (30) comprises a laser source of which original beam is cut such as to form at least two laser beams (31, 32).

7. The laser system (1) according to any one of claims 1 to 6, wherein the wavelengths of the at least two laser beams (31, 32) are located in the near infrared field (800 nm to 1.05 µm).

8. The laser system (1) according to any one of claims 1 to 6, wherein the wavelengths of the at least two laser beams (31, 32) are located in the mean infrared field (1.1 µm to 10 µm).

9. The laser system (1) according to any one of claims 1 to 8, wherein the means (2) for generating the relativistic electrons (21) packet (20) comprise a LINAC RF.

10. The laser system (1) according to any one of claims 1 to 8, wherein the means (2) for generating the relativistic electrons (21) packet (20) comprise a plasma wake laser accelerator.

11. The laser system (1) according to any one of claims 1 to 8, wherein the means (2) for generating the relativistic electrons (21) packet (20) comprise an electron storage ring.

12. The laser system (1) according to any one of the preceding claims, wherein the at least two laser beams (31, 32) propagate according to an inhomogeneous wave geometry corresponding to a spatial and temporal patterning such that the locus of the maximum energy of each laser beam (31, 32) exhibits an angular shift with respect to the phase fronts in the interaction area (4).

13. The laser system (1) according to any one of the preceding claims, wherein at least a third beam makes it possible to trap the relativistic electrons in the plane transverse to axis (Oz) and throughout the interaction area (4).

14. The laser system (1) according to any one of claims 1 to 12, wherein at least a device for spatially patterning the laser beams makes it possible to trap the relativistic electrons in the plane transverse to the axis (Oz) and throughout the interaction area (4).

15. The laser system (1) according to any one of the preceding claims, wherein the laser beams (31, 32) are confined inside an optical resonating cavity.

16. The laser system (1) according to any one of the preceding claims, including phase fronts controlling means.

17. The laser system (1) according to any one of the preceding claims, including spectral phase controlling means.

18. A method for generating a free-electron laser beam (5) providing a very short wavelength beam in a spectral range from far ultra-violet to gamma rays, including a step of generating a packet (20) of relativistic electrons capable of propagating along a propagation direction (Oz) and a step of generating an undulator beam (30) capable of interacting with the relativistic electron (21) packet (20), **characterized in that** it includes, such as to generate the undulator beam (30), a prior interference step, at an interaction area (4) traversed by the propagation direction (Oz) of said packet (20), of exclusively at least two laser beams (31, 32) propagating in directions different from each other and each of which having at least a non-zero component in a plane orthogonal to the propagation direction (Oz) of said packet (20), a step of trapping relativistic electrons in the interference fringes of the undulator beam (30) by injection at the input of the interaction area (4), and a step of amplifying, in the undulator (30), a beam (5) resulting from the diffusion of lasers (31, 32) on the relativistic electrons.
